(19) **Europäisches Patentamt / European Patent Office / Office européen des brevets**

(11) **EP 4 235 332 A1**

(12) # EUROPEAN PATENT APPLICATION

(43) Date of publication:
**30.08.2023  Bulletin 2023/35**

(21) Application number: **22158862.7**

(22) Date of filing: **25.02.2022**

(51) International Patent Classification (IPC):
**G05D 1/00** (2006.01)

(52) Cooperative Patent Classification (CPC):
**G05D 1/106; G05D 1/0022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Skyroads AG**
**80539 Munich (DE)**

(72) Inventor: **Bommer, Otto**
**88046 Friedrichshafen (DE)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **A METHOD AND SYSTEM FOR INCREASING AN OPERATIONAL SAFETY OF AN AIR VEHICLE**

(57)    The invention provides a method and a safety system for increasing an operational safety of an air vehicle (AV) by a digital safety rope, DSR, between a ground station (2) and an airborne unit (3) of the air vehicle, AV. The method comprises: transmitting (step S1) DSR-messages (M) by a DSR-transceiver of the airborne unit (3) to a DSR-transceiver of the ground station (2) in a radio frequency, RF, band assigned to the respective air vehicle (AV); transmitting (step S2) DSR-responses (R) by the DSR-transceiver of the ground station (2) to the DSR-transceiver of the airborne unit (3) in the RF band assigned to the respective AV, wherein a generation of the DSR-responses (R) is triggered by DSR-messages (M) received by the DSR-transceiver of the ground station (2) from the DSR-transceiver of the airborne unit (3); measuring (step S3) a round trip time, RTT, between the transmission of a DSR-message (M) by the DSR-transceiver of the airborne unit (3) and the reception of an associated DSR-response (R) by the DSR-transceiver of the airborne unit (3); determining (step S4) a distance (d) between the AV and the ground station (2) based on the measured RTT; and controlling (step S5) power supplied to a propulsion system of the AV if the determined distance (d) exceeds a predefined maximum distance (dmax) stored in a memory of the AV.

FIG 1

EP 4 235 332 A1

**Description**

The invention relates to a computer-implemented method for increasing an operational safety of an air vehicle by a digital safety rope (DSR) between a ground station and the air vehicle.

Air vehicles can participate in air races or other activities involving a large number of nearby spectators. Although conventional air vehicles comprise a primary control system for safe flight operation, there is still a possibility of an unanticipated malfunction of the primary control system of the air vehicle. An air vehicle participating in an air race is typically moving at a relatively high speed over ground in proximity to a large number of nearby spectators. In the unlikely event of an unanticipated malfunction of the primary control system including a ground system and an onboard avionic system, in a worst-case scenario the air vehicle may hit nearby spectators or uninvolved parties leading to multiple casualties.

It is accordingly an object of the present invention to increase an operational safety of an air vehicle moving in the vicinity of persons on ground such as spectators.

This object is achieved according to a first aspect of the present invention by a method comprising the features of claim 1.

The invention provides according to a first aspect a method for increasing an operational safety of an air vehicle by a digital safety rope, DSR, between a ground station and the air vehicle,
wherein the method comprises the steps of:

transmitting DSR-messages, M, by a DSR-transceiver of an airborne unit of the air vehicle to a DSR-transceiver of the ground station in a dedicated radio frequency, RF, band assigned to the respective air vehicle,

transmitting DSR-responses, R, by the DSR-transceiver of the ground station to the DSR-transceiver of the airborne unit of the air vehicle in the dedicated radio frequency, RF, band assigned to the respective air vehicle, wherein a generation of associated DSR-responses, R, is triggered by DSR-messages, M, received by the DSR-transceiver of the ground station from the DSR-transceiver of the airborne unit of the air vehicle, measuring a round trip time, RTT, between the transmission of a DSR-message, M, by the DSR-transceiver of the airborne unit of the air vehicle and the reception of an associated DSR-response, R, by the DSR-transceiver of the airborne unit of the air vehicle,

determining a distance, d, between the air vehicle and the ground station based on the measured round trip time, RTT, and

controlling power supplied to a propulsion system of the air vehicle if the determined distance, d, exceeds a predefined maximum distance, $d_{max}$, stored in a memory of the air vehicle.

In a possible embodiment of the method according to the first aspect of the present invention, the distance, d, between the air vehicle and the ground station is determined depending on the determined round trip time, RTT, a response time of the DSR-transceiver of the ground station, a reception measurement time of the DSR-transceiver of the airborne unit of the air vehicle and a speed of the transmitted signal.

In a possible embodiment of the method according to the first aspect of the present invention, the distance between the air vehicle and the ground station is determined through a calculation based on the formula:

$$d = (RRT - t_{rg} - t_{ra})/2 * c$$

wherein

RRT is the determined round trip time
$t_{rg}$ is the response time of the DSR-transceiver of the ground station,
$t_{ra}$ is the reception and measurement time of the DSR-transceiver of the air vehicle and
c is the speed of light.

In a further possible embodiment of the method according to the first aspect of the present invention, the power supplied to the propulsion system of the air vehicle is reduced or is interrupted by means of a safety relay of the air vehicle if the determined distance, d, exceeds the stored predefined maximum distance, $d_{max}$.

In a still further possible embodiment of the method according to the first aspect of the present invention, the DSR-message, M, comprises an unencrypted preamble and message payload data encrypted by a pre-shared secret key, PSK.

In a further possible embodiment of the method according to the first aspect of the present invention, the DSR-response, R, comprises an unencrypted preamble and response payload data encrypted by the pre-shared secret key, PSK.

In a possible embodiment of the method according to the first aspect of the present invention, the DSR-message, M, comprises a message identifier, ID, an air vehicle identifier, AV-ID, of the air vehicle and a sequence number, SN.

In a still further possible embodiment of the method according to the first aspect of the present invention, the message payload data of the DSR-response, R, comprises a message identifier, ID, an air vehicle identifier, AV-ID, of the air vehicle and a sequence number, SN.

In a further possible embodiment of the method according to the first aspect of the present invention, the air vehicle comprises a piloted air vehicle.

In a still further possible embodiment of the method according to the first aspect of the present invention, the air vehicle comprises a not piloted unmanned air vehicle, UAV.

In a further possible embodiment of the method according to the first aspect of the present invention, the stored maximum distance, $d_{max}$, is predefined depending on a desired operational volume and a maximum ballistic range of the air vehicle at the boundary of the operational volume ($d_{max} + d_{ballis-tic}$).

In a further possible embodiment of the method according to the first aspect of the present invention, the ground station is located in fixed position and a trajectory of the air vehicle is determined on the basis of a sequence of calculated distances, d, between the air vehicle and the ground station.

In a further possible embodiment of the method according to the first aspect of the present invention, the DSR-messages, M, are transmitted by the DSR-transceiver of the airborne unit of the air vehicle continuously with a constant or adjustable transmission rate, TR.

In a further possible embodiment of the method according to the first aspect of the present invention, the transmission rate, TR, of the DSR-messages, M, transmitted by the DSR-transceiver of the airborne unit of the air vehicle is adjusted during system design depending on a maximum velocity of the air vehicle.

In a still further possible embodiment of the method according to the first aspect of the present invention, wherein if the power supplied to the propulsion system of the air vehicle is interrupted by means of a safety relay an ejection seat of a pilot of the air vehicle is activated and/or a parachute of the air vehicle is activated simultaneously.

The invention provides according to a further aspect a safety system for increasing the operational safety of an air vehicle comprising the features of claim 15.

The invention provides according to the second aspect a safety system for increasing an operational safety of an air vehicle, said safety system comprising a safety control unit having a DSR-controller configured to perform the method according to the first aspect of the present invention.

In a possible embodiment of the safety system according to the second aspect of the present invention, the safety control unit of the air vehicle comprises at least one interface to a primary control system of the air vehicle including a flight control unit and an engine control unit for the propulsion system of the air vehicle.

In a possible embodiment of the safety system according to the second aspect of the present invention, the safety control unit comprises a DSR-transceiver adapted to exchange DSR-messages, M, and DSR-Responses, R, with a DSR-transceiver of the ground station in a dedicated radio frequency, RF, band assigned to the respective air vehicle via a wireless transmission link.

In a possible embodiment of the safety system according to the second aspect of the present invention, the air vehicle is a racing air vehicle adapted to perform a flight race within an operational volume defined by a predefined maximum distance between the air vehicle and the ground station.

In a possible embodiment of the safety system according to the second aspect of the present invention the air vehicle is a transport air vehicle adapted to transport passengers or cargo through an operational volume forming a corridor between a start location and a target location.

In the following, possible embodiments of the different aspects of the present invention are described in more detail with reference to the enclosed figures.

Fig. 1    illustrates a flowchart of a possible exemplary embodiment of a computer-implemented method for increasing an operational safety of an air vehicle by a digital safety rope between a ground station and the air vehicle according to a first aspect of the present invention;

Fig. 2    shows a schematic diagram for illustrating the operation of a method and system according to the present invention;

Fig. 3    shows a schematic block diagram for illustrating a possible exemplary embodiment of a safety system according to the present invention;

Fig. 4    shows a signal diagram for illustrating a possible exemplary embodiment of a method and system for increasing an operational safety of an air vehicle according to the present invention;

Fig. 5    shows a schematic diagram for illustrating a possible exemplary data format structure of messages used by the safety system according to the present invention.

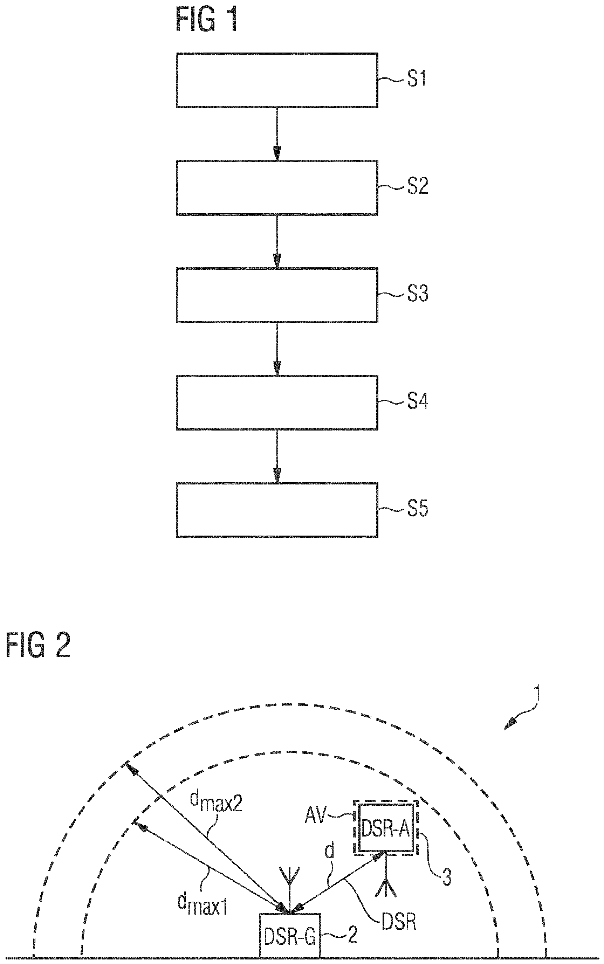

As can be seen from the flowchart illustrated in Fig. 1, the computer-implemented method for increasing an operational safety of an air vehicle (AV) by a digital safety rope (DSR) between a ground station 2 and the air vehicle AV can comprise several main steps.

In a first step S1, DSR-messages M are transmitted by a DSR-transceiver of the air vehicle AV to a DSR-transceiver located at a ground station 2 in a dedicated radio frequency, RF, band assigned to the respective air vehicle AV.

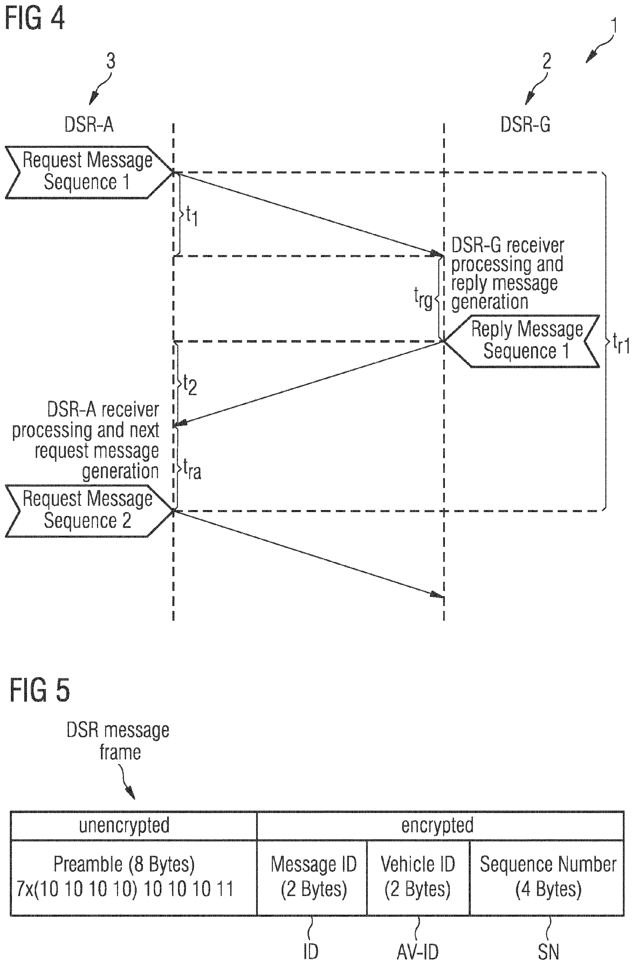

In a further step S2, DSR-responses R are transmitted by the DSR-transceiver of the ground station 2 back to the DSR-transceiver of the air vehicle AV in the dedicated radio frequency, RF, band, assigned to the respective air vehicle AV within a fixed and pre-determined time $t_{rg}$. The DSR-responses R are triggered by the DSR-messages M received by the DSR-transceiver of the ground station 2 from the DSR-transceiver of the air vehicle AV as also illustrated in the schematic diagram of Fig. 4.

In a further step S3, a round trip time RTT between the transmission of a DSR message M by the DSR-transceiver of the air vehicle AV and the reception of an associated DSR-response R by the DSR-transceiver of the air vehicle AV is measured.

In a further step S4, a distance d between the air vehicle AV and the ground station 2 is determined based on the measured round trip time RTT. In a possible embodiment, the distance d between the air vehicle AV and the ground station 2 can be determined through calculation by data processing means based on the determined round trip time RTT, a response time of the DSR-transceiver at the ground station 2 and a reception and measurement time of the DSR-transceiver of the air vehicle AV and based on a speed of the transmitted signal, i.e. the speed of light c.

In a possible implementation, the distance d between the air vehicle AV and the ground station 2 is determined in step S4 through calculation based on the formula:

$$d = (RTT - t_{rg} - t_{ra})/2 * c$$

wherein

RTT is the determined round trip time,
$t_{rg}$ is the response time of the DSR-transceiver of the ground station,
$t_{ra}$ is the reception and measurement time of the DSR-transceiver of the air vehicle and
c is the speed of light.

In a further step S5, power supplied to a propulsion system 5D of the air vehicle AV is controlled if the determined distance d exceeds a predefined maximum distance $d_{max}$ which can be stored in a memory of the air vehicle AV. In a possible implementation, the power supplied to the propulsion system of the air vehicle AV can be reduced or interrupted by means of a safety relay of the air vehicle AV if the determined distance d exceeds the stored predefined maximum distance $d_{max}$. The maximum distance $d_{max}$ can be predefined in a possible implementation depending on a desired operational volume and a ballistic range of the respective air vehicle AV. The air vehicle AV can comprise a piloted air vehicle or a not piloted unmanned air vehicle (UAV). If the power supplied to the propulsion system is interrupted in step S5 by means of a safety relay, in a possible implementation additional actuators are activated such as an ejection seat for a pilot or a parachute of the air vehicle AV.

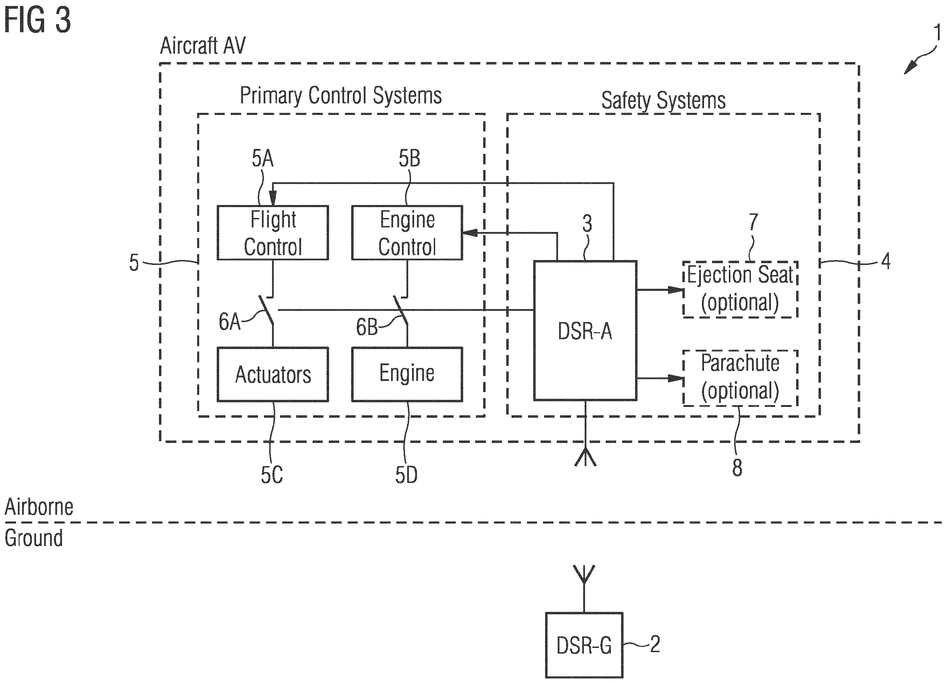

Fig. 2 shows schematically a possible embodiment of a safety system 1 employing the computer-implemented method illustrated in the flowchart of Fig. 1. The safety system 1 illustrated in Fig. 2 comprises a ground station 2 adapted to communicate with an airborne unit 3 integrated in the air vehicle AV. The ground station 2 can be installed at the center of a predefined operational volume defined by a radius defining a maximum allowed distance $d_{max}$ of the air vehicle AV from the ground station 2 The airborne unit 3 is installed on the air vehicle AV or aircraft. The ground station 2 and the airborne unit 3 can communicate via a wireless communication link WCL. For this purpose, the airborne unit 3 and the ground station 2 comprise antennas to exchange communication messages as illustrated schematically in Fig. 3. Fig. 2 illustrates a momentary distance d between the moving air vehicle 3 and the stationary ground station 2. The ground station 2 and the airborne unit 3 each have a transceiver and an antenna operating on the same predefined radio frequency band. Further, the ground station 2 and the airborne unit 3 can comprise a pre-shared secret key PSK to allow integrity protection of the exchanged messages, i.e. DSR messages M and DSR responses R. In the operational volume, single or a multiple airborne vehicles AV can operate in the same area using associated dedicated frequency bands for communication.

As illustrated in Fig. 2, the operational volume can be defined by a first maximum distance $d_{max1}$. As long as the air vehicle AV is moving within the operational volume defined by the first maximum distance $d_{max1}$ no countermeasures are required. In a possible implementation, corrective input to a primary flight control system 5 of the air vehicle AV is provided to limit a possible flight envelope when the position of the air vehicle AV is outside the operational volume defined by the first maximum distance $d_{max1}$. However, when the position of the air vehicle AV is outside the operational volume defined by a second maximum distance $d_{max2}$ which may lead to a ballistic flight of the air vehicle AV outside the operational volume defined by the second maximum distance $d_{max2}$ plus ballistic range, the aircraft power supplied to the propulsion system 5D of the air vehicle AV can be shut down completely. In a possible embodiment, the air vehicle AV carrying the airborne unit 3 is observed by a plurality of spectators located outside the range of the second maximum distance $d_{max2}$. Different maximum distances for triggering different reactions or countermeasures can be defined depending on the use case. The stored maximum distance $d_{max}$ can be predefined depending on a desired operational range and ballistic range of the respective air vehicle AV at maximum velocity and altitude. The definition of the maximum distance $d_{max}$ takes into account a worst case remaining kinetic and potential energy of the air vehicle AV resulting in a corresponding ballistic range of the airborne air vehicle AV. Additional maximum distances or radii can be defined to trigger additional earlier responses, e.g. a reduction of engine power to the propulsion system 5D of the air vehicle AV to reduce the ballistic range of the air vehicle AV prior to reaching the outer limits or distances or to activate specific actuators such as ejection seats 7 or parachutes 8. Additional safety systems such as a parachute system 8 can be installed in the air vehicle AV to reduce the ballistic flight range of the affected aircraft or air vehicle AV after flight termination caused by a shutdown of its propulsion system 5D.

In the illustrated embodiment of Fig. 2, the operational volume is circular. A noncircular operational volume can be approximated by installing multiple ground stations 2 at different locations with overlapping radius and additional airborne units 3. The airborne unit 3 is part of the air vehicle safety system 4 of the air vehicle AV. As illustrated in the schematic block diagram of Fig. 3, the aircraft or air vehicle AV comprises a primary flight control unit 5A and an engine control unit 5B forming part of a primary control system 5 of the air vehicle AV. The airborne unit 3 forms part of a secondary air vehicle safety system 4 connected to a primary control system 5 of the air vehicle AV through one or more interfaces.

The primary control system 5 of the air vehicle AV comprises in the illustrated embodiment a flight control unit 5A and an engine control unit 5B. The flight control unit 5A can be connected to one or more actuators 5C of the air vehicle AV. The engine control unit 5B can control power applied to a propulsion system 5D of the aircraft AV comprising one or more engines.

The additional air vehicle safety system 4 provides additional protection if the primary control system 5 has a loss of function or has a malfunction. The airborne unit 3 can comprise two types of interfaces to the primary control system 5. It can comprise a direct connection to the primary control system 5 to trigger a graceful limitation of the flight envelope or trajectory of the affected air vehicle AV. The airborne unit 3 can also control via an interface cut-off relays 6A, 6B which can remove the input signals supplied by the flight control unit 5A to the actuators 5C or to interrupt the power supplied to the engines of the propulsion system 5D of the air vehicle AV as illustrated schematically in Fig. 3. The airborne unit 3 of the air vehicle AV can also control additional actuators such as an ejection seat 7 for a pilot or a parachute 8 of the air vehicle AV. In a possible embodiment, if the power supplied to the propulsion system 5D of the air vehicle AV is interrupted by means of a safety relay 6B, the controller of the airborne unit 3 can activate the ejection seat 7 for a pilot of the air vehicle AV and/or activate a parachute 8 of the air vehicle AV.

Fig. 4 illustrates in a signal diagram the communication between an airborne unit 3 integrated in an air vehicle safety system 4 of an air vehicle AV and a ground station 2. The airborne unit 3 comprising a transceiver and an antenna can send a DSR-message M to the DSR-transceiver of the ground station 2 in a dedicated radio frequency, RF, band assigned to the respective air vehicle AV. The transmission of the message M requires a time ti as illustrated schematically in Fig. 4. The transceiver of the ground station 2 does process the received message M and generates automatically a corresponding DSR-response R forming a reply message. This requires a fixed and pre-determined response time of the DSR-transceiver of the ground station $t_{rg}$ as illustrated schematically in Fig. 4. The generated DSR-response R is transmitted by the DSR-transceiver of the ground station 2 to the DSR-transceiver of the air vehicle AV in the dedicated frequency band RF assigned to the respective air vehicle AV. The transmission of the DSR-response R requires a time period $t_2$ as illustrated schematically in Fig. 4. The received DSR-response R is processed by the airborne unit 3 resulting in a request to send the next DSR-message M. The time required for reception and processing the received response message is $t_{ra}$ as illustrated in Fig. 4.

The airborne unit 3 can comprise a calculation unit or a processor adapted to perform calculations based on the determined round trip time RTT, a response time of the DSR-transceiver of the ground station 2 and the reception and measurement time of the DSR-transceiver of the air vehicle AV. In a possible embodiment, the processor of the airborne unit 3 can determine or calculate the current distance d between the air vehicle AV and the ground station 2 based on the following formula:

$$d = (RTT - t_{rg} - t_{ra})/2 * c$$

wherein
c is the speed of light.

The determined distance d can be compared by a comparator to a predefined stored maximum distance $d_{max}$. This maximum distance $d_{max}$ can be read in a possible implementation from a configuration or data memory of the safety system 4. As long as the air vehicle AV is within the predefined limits, the safety relay 6B is closed and propulsion power is supplied to the engines of the propulsion system 5D of the air vehicle AV. The safety relay 6B can be provided within the wiring of the primary control system 5 to supply power to the engines of the propulsion system 5D.

Fig. 5 illustrates a possible exemplary data format of a DSR-message frame used for the DSR-messages M and/or the DSR-responses R. In a possible embodiment, the DSR-message M and the DSR-response R comprise the same message frame format as illustrated in Fig. 5. The DSR-message M and DSR-response R can comprise in a possible implementation an unencrypted preamble and a message payload data encrypted by a pre-shared secret key PSK. In the exemplary implementation illustrated in Fig. 5, the preamble comprises 8 Bytes. The preamble is designed to allow receiver synchronization and precise time measurement of the round trip time RTT and consists of an alternating sequence of 0 and 1 bits with final bits 11.

The message payload data of the DSR-message M and of the DSR-response R can comprise in a possible implementation a message identifier, ID, an air vehicle identifier, AV-ID, of the air vehicle AV and a sequence number, SN. In the illustrated implementation of Fig. 5, the message ID comprises 2 Bytes, the air vehicle identifier AV-ID comprises also 2 Bytes and the sequence number SN comprises 4 Bytes. The payload data may comprise in the illustrated embodiment in total 8 Bytes.

Also, the unencrypted preamble comprises in the illustrated implementation of Fig. 5 8 Bytes.

The message ID is either 0 indicating a measurement request or 1 indicating a measurement response.

The air vehicle ID (AV-ID) can be predefined for the air vehicle AV and is assigned prior to the operation of the airborne unit 3 in the air vehicle AV to allow identification of the return message R by the airborne unit 3.

The sequence number SN allows unique identification of each request and ensures that each encrypted payload data of the response DSR-message R is unique on each measurement throughout the operation of the system.

The payload data can be encrypted by a preshared key PSK which protects against spoofing. The encryption can involve AES-128 or AES-256 in a possible implementation.

The safety system 1 according to the present invention can take into account different failure modes FMs in proximity to the boundary of the operational volume as defined by the maximum distance $d_{max1}$ and $d_{max2}$ as illustrated in Fig. 2. Failure modes inside the operational volume are not considered as they form part of the safety considerations of the primary control system 5. Pilot errors which may lead to a trajectory of the air vehicle AV outside the operational volume are normally mitigated by the primary flight control system 5 of the air vehicle AV.

Different failure modes may lead to an unmitigated effect on uninvolved persons such as spectators. These failure modes can cause that the aircraft collides with uninvolved persons on the ground leading to multiple casualties. These failure modes include for instance a loss of the primary flight control system 5, a malfunction of the primary flight control system 5, a loss of the engine control, a malfunction of the engine control, a loss of engine power or a loss or a malfunction of a navigation system of the air vehicle AV. If there is a loss or malfunction of the primary flight controls 5A or a loss or malfunction of the engine control 5B, the air vehicle safety system 4 does deactivate the aircraft propulsion power of the air vehicle AV when the ballistic flight may lead to a trajectory of the air vehicle AV outside the operational volume defined by the second maximum distance $d_{max2}$ plus ballistic range. In this way, the effects on the uninvolved persons or spectators are mitigated. The same applies for loss of engine power of the propulsion system 5D of the air vehicle AV.

Also, a loss or malfunction of the navigation system is mitigated by the safety system 1 according to the present invention. The airborne unit 3 measures the current distance d of the air vehicle AV to the ground station 2 and can provide corrective input to the primary flight control system 5 of the air vehicle AV to limit a flight envelope when the ballistic flight of the air vehicle AV may lead to a trajectory of the air vehicle AV outside the operational volume defined by the first maximum distance $d_{max1}$ as illustrated in Fig. 2. When the position of the air vehicle AV is outside the operational volume defined by the second maximum distance $d_{max2}$, the aircraft power supplied to the propulsion system 5D of the air vehicle AV is automatically shut down or deactivated.

In a preferred embodiment, the safety output of the airborne unit 3 supplied to the safety relays 6A, 6B is active high. Accordingly, in a failure mode where the airborne unit 3 is itself affected or fails, such a loss automatically deactivates the safety output and powers off the flight and engine control inputs and the flight control and engine power input leading to an instant flight termination of the air vehicle AV. Accordingly, in a failure mode where the airborne unit 3 or the ground station 2 of the safety system 1 comprise a malfunction or the primary flight control 5 comprises a malfunction, the propulsion system 5D of the air vehicle AV is switched off thus protecting uninvolved persons on the ground observing the air vehicle AV from a distance outside the operational volume $d_{max}$.

Only in the unlikely event of a malfunction of the primary and secondary safety system, i.e. a malfunction of the primary flight control system 5 and of the additional air vehicle safety system 4 at the same time, a collision of the air vehicle AV with uninvolved persons may occur.

In a possible embodiment, the pre-shared secret key PSK can be recreated and reloaded into the airborne unit 3 and the controller of the ground station 2 on each operation to avoid interception and decryption of the secret key PSK by a long-term observation of messages over multiple operation periods.

In a preferred embodiment, each air vehicle AV operating in the operational volume comprises a dedicated assigned radio frequency band for communication. In a possible implementation, an RF frequency in the L- or S-band can be used which is already being proposed for command and control data links by ITU-R such as 960 to 1164 MHz or 5030 to 5091 MHz. In a possible embodiment, multiple safety relays are installed in sequence to provide protection against a single stuck relay.

The safety system 1 does mitigate the high impact of a very low probability failure scenario by providing a digital safety rope (DSR) flight termination system which protects from the event of an air vehicle AV leaving an operational volume defined by a radius or a maximum distance $d_{max}$. The momentary distance of the air vehicle AV to a fixed point on the ground is determined by measuring a round trip delay of radio frequency messages exchanged between an airborne unit 3 of the air vehicle AV and a ground station 2 located at a center point of the respective operational volume. If the determined distance d is within a predefined maximum radius, the safety output of the airborne unit 3 is active and power is provided to the actuators and the propulsion system 5D of the air vehicle AV. However, if the determined distance d is outside the predefined maximum permissible distance from the ground station 2, the safety output of the airborne unit 3 becomes inactive and consequently power is inhibited. As a consequence, the flight of the air vehicle AV is immediately terminated. In this way, uninvolved persons or spectators on the ground are protected against failure modes.

The safety system 1 according to the present invention can be designed with the following principles in mind. There is a segregation from the primary aircraft or air vehicle AV and the ground system. The design concept makes it easily verifiable and auditable. A dissimilar design of the safety system 1 according to the present invention to the primary ground and airborne systems leads to additional protection from common causes for failure of the primary system. A fail-safe, power loss of the airborne system inherently deactivates the safety output and leads to a flight termination even if the airborne unit 3 itself fails. It is possible that a plurality of airborne vehicles can operate in the same operational volume where each air vehicle AV comprises a dedicated associated RF frequency band for communication.

The safety system 1 according to the present invention can be used for a wide variety of use causes. In a possible embodiment, the safety system 1 according to the present invention can increase significantly the operation safety of air vehicles AV participating in an air race. Further, the air vehicles AV can be used in a possible use case as roller coaster air vehicles for transporting people to cause excitement. Further, the air vehicles AV can be used to transport people for instance in a predefined area from a starting point A to a destination point B within the operational volume, for instance over vulnerable ground areas including residential buildings. The shape of the operational volume can be approximated by installing multiple ground stations 2 at different locations with overlapping radius and additional airborne units 3. Accordingly, the safety system 1 according to the present invention can also form part of a flight control system for piloted or unpiloted air vehicles AV transporting people from a starting location to a destination or target location through a predefined operational volume forming a transport corridor.

Further embodiments of the method and system according to the present invention are possible. In a possible embodiment, the DSR-messages M are transmitted by the DSR-transceiver of the air vehicle AV continuously with a constant transmission rate TR. In a further possible embodiment, the transmission rate can also be adjustable. In a possible embodiment, the transmission rate TR of the DSR-messages M transmitted by the DSR-transceiver of the air vehicle AV can be adjusted depending on the maximum velocity. In particular, if the velocity of the air vehicle AV is high, the transmission rate is increased during system design as well. In this way, the operation safety can further be increased. In a still further possible embodiment of the method and system according to the present invention, a trajectory of the air vehicle AV can be determined or plotted on the basis of a sequence of calculated distances d between the air vehicle AV and the ground station 2. The form of the determined trajectory T can provide additional information to trigger countermeasures for the protection of uninvolved persons on the ground. For instance, if the spectators of an air race are located at a specific location outside the operational volume and there is a danger that the air vehicle AV will leave the operational volume but the trajectory indicates that the air vehicle AV will fly towards a direction away from the sitting spectators, a higher value for the maximum distance $d_{max}$ can be applied. However, if a bearing of the trajectory T of the air vehicle AV points towards the spectators, this may trigger an even earlier reaction of the safety system 1 with respect to the propulsion system 5D of the air vehicle AV and/or the actuators of the air vehicle AV.

## Claims

1. A method for increasing an operational safety of an air vehicle (AV) by a digital safety rope, DSR, between a ground station (2) and an airborne unit (3) of the air vehicle (AV),
the method comprising the steps of:

   - transmitting (step S1) DSR-messages (M) by a DSR-transceiver of the airborne unit (3) to a DSR-transceiver of the ground station (2) in a radio frequency, RF, band assigned to the respective air vehicle (AV) ;
   - transmitting (step S2) DSR-responses(R) by the DSR-transceiver of the ground station (2) to the DSR-transceiver of the airborne unit (3) in the radio frequency, RF, band assigned to the respective air vehicle (AV), wherein a generation of the DSR-responses (R) is triggered by DSR-messages (M) received by the DSR-transceiver of the ground station (2) from the DSR-transceiver of the airborne unit (3) of the air vehicle (AV) ;
   - measuring (step S3) a round trip time (RTT) between the transmission of a DSR-message (M) by the DSR-transceiver of the airborne unit(3) of the air vehicle (AV) and the reception of an associated DSR-response(R ) by the DSR-transceiver of the airborne unit (3) of the air vehicle (AV);
   - determining (step S4) a distance (d) between the air vehicle (AV) and the ground station (2) based on the measured round trip time (RTT); and
   - controlling (step S5) power supplied to a propulsion system of the air vehicle (AV) if the determined distance (d) exceeds a predefined maximum distance (dmax) stored in a memory of the air vehicle (AV).

2. The method according to claim 1 wherein the distance (d) between the air vehicle (AV) and the ground station (2) is determined through calculation based on the formula:

$$d = (RRT - Trg - Tra)/2 * c$$

wherein

RRT is the determined round trip time,
Trg is the response time of the DSR-transceiver of the ground station,
Tra is the reception and measurement time of the DSR-transceiver of the airborne unit (3) of the air vehicle (AV) and
c is the speed of light.

3. The method according to claim 1 or 2 wherein the power supplied to the propulsion system (5D) of the air vehicle (AV) is reduced or interrupted by means of a safety relay (6B) of the air vehicle (AV) if the determined distance (d) exceeds a stored predefined maximum distance (dmax).

4. The method according to any of the preceding claims 1 to 3 wherein the DSR-message (M) comprises a preamble and message payload data encrypted by a pre-shared secret key (PSK).

5. The method according to any of the preceding claims 1 to 4 wherein the DSR-response (R) comprises a preamble and response payload data encrypted by the pre-shared secret key (PSK).

6. The method according to claim 1 and 5 wherein the message payload data of the DSR-message (M) comprises a message identifier, ID,

an air vehicle identifier, AV-ID, of the air vehicle (AV) and
a sequence number, SN.

7. The method according to claim 1 to 6 wherein the message payload data of the DSR-response (R) comprises a message identifier, ID,

an air vehicle identifier, AV-ID, of the air vehicle (AV) and
a sequence number SN.

8. The method according to any of the preceding claims wherein the air vehicle (AV) comprises a piloted air vehicle (AV) or not piloted unmanned air vehicle (UAV).

9. The method according to any of the preceding claims wherein the stored maximum distance (dmax) is predefined depending on a desired operational range and a maximum ballistic range of the air vehicle (AV).

10. The method according to any of the preceding claims wherein the ground station (2) is located in fixed position and a trajectory (T) of the air vehicle (AV) is determined on the basis of a sequence of calculated distances (d) between the air vehicle (AV) and the ground station (2).

11. The method according to any of the preceding claims wherein the DSR-messages (M) are transmitted by the DSR-transceiver of the airborne unit (3) of the air vehicle (AV) continuously with a constant or adjustable transmission rate, TR.

12. The method according to any of the preceding claims wherein the transmission rate, TR, of the DSR-messages (M) transmitted by the DSR Transceiver of airborne unit (3) of the air vehicle (AV) is adjusted depending on a maximum velocity of the air vehicle (AV).

13. The method according to any of the preceding claims wherein if the power supplied to the propulsion system (5D) of the air vehicle (AV) is interrupted by means of a safety relay (6B), simultaneously an ejection seat (7) of a pilot of the air vehicle (AV) is activated and/or a parachute (8) of the air vehicle (AV) is activated.

14. The method according to any of the preceding claims 1 to 13 wherein a correction input is applied to a flight control system (5) of the air vehicle (AV) to limit a flight envelope of the air vehicle (AV) if the position of the air vehicle is outside an operational volume defined by a first maximum distance $(d_{max1})$ from the ground station (2) and wherein the propulsion power of the air vehicle (AV) is completely interrupted if the position of the air vehicle (AV) is outside an operational volume defined by a second maximum distance $(d_{max2})$ from the ground station (2).

15. A safety system (1) for increasing the operational safety of at least one air vehicle (AV),
said safety system (1) comprising an air vehicle safety system (4) having an airborne unit (3) integrated in the air vehicle (AV) configured to perform the method according to any of the preceding claims 1 to 14.

16. The safety system according to claim 15 wherein the airborne unit (3) of the air vehicle safety system (4) of the air vehicle (AV) comprises at least one interface to a primary control system (5) of the air vehicle (AV) including a flight control unit (5A) for controlling actuators (5C) of the air vehicle (AV) and an engine control unit (5B) for controlling engines of a propulsion system (5D) of the air vehicle (AV).

17. The safety system according to claim 15 or 16 wherein the airborne unit (3) of the air vehicle safety system (4) comprises a DSR-transceiver being adapted to exchange DSR-messages (M) with a DSR-transceiver of the ground station (2) in a dedicated radio frequency, RF, band assigned to the air vehicle (AV) via a wireless transmission link.

18. The safety system according to any of the preceding claims 15 to 17 wherein the air vehicle (AV) is a racing air vehicle adapted to perform a flight race within an operational volume defined by a predefined maximum distance ($d_{max}$) between the air vehicle (AV) and the ground station (2).

# FIG 1

# FIG 2

## FIG 3

Aircraft AV

Primary Control Systems

Safety Systems

5A     5B

Flight Control

Engine Control

5

3

7

Ejection Seat (optional)

4

6A    6B

DSR-A

Actuators

Engine

Parachute (optional)

5C     5D

8

Airborne

Ground

DSR-G   2

EP 4 235 332 A1

# FIG 4

# FIG 5

DSR message
frame

| unencrypted | encrypted | | |
|---|---|---|---|
| Preamble (8 Bytes)<br>7x(10 10 10 10) 10 10 10 11 | Message ID<br>(2 Bytes) | Vehicle ID<br>(2 Bytes) | Sequence Number<br>(4 Bytes) |
| | ID | AV-ID | SN |

Europäisches
Patentamt

European
Patent Office

Office européen
des brevets

# EUROPEAN SEARCH REPORT

Application Number

EP 22 15 8862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/170739 A1 (SZ DJI TECHNOLOGY CO LTD [CN]) 27 September 2018 (2018-09-27) * paragraph [0057] – paragraph [0210] * | 1-18 | INV. G05D1/00 |
| A | US 2021/127347 A1 (AKKARAKARAN SONY [US] ET AL) 29 April 2021 (2021-04-29) * paragraph [0048] – paragraph [0111] * | 1-18 | |
| A | US 2021/191390 A1 (HWANG MIRAN [KR] ET AL) 24 June 2021 (2021-06-24) * paragraph [0102] – paragraph [0396] * | 1-18 | |
| A | US 2021/058936 A1 (GORDAYCHIK BRIAN [US]) 25 February 2021 (2021-02-25) * paragraph [0051] – paragraph [0140] * | 1-18 | |

TECHNICAL FIELDS
SEARCHED        (IPC)

G05D

The present search report has been drawn up for all claims

| Place of search | Date of completion of the search | Examiner |
|---|---|---|
| Munich | 19 July 2022 | Coda, Ruggero |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 15 8862

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2022

| Patent document cited in search report | Publication date | Patent family member(s) | Publication date |
|---|---|---|---|
| WO 2018170739 A1 | 27-09-2018 | CN 110249604 A | 17-09-2019 |
| | | EP 3443727 A1 | 20-02-2019 |
| | | JP 7088953 B2 | 21-06-2022 |
| | | JP 2020511358 A | 16-04-2020 |
| | | KR 20190113986 A | 08-10-2019 |
| | | US 2018330624 A1 | 15-11-2018 |
| | | US 2020302806 A1 | 24-09-2020 |
| | | WO 2018170739 A1 | 27-09-2018 |
| US 2021127347 A1 | 29-04-2021 | CN 114586383 A | 03-06-2022 |
| | | TW 202133659 A | 01-09-2021 |
| | | US 2021127347 A1 | 29-04-2021 |
| | | WO 2021081324 A1 | 29-04-2021 |
| US 2021191390 A1 | 24-06-2021 | KR 20210078164 A | 28-06-2021 |
| | | US 2021191390 A1 | 24-06-2021 |
| US 2021058936 A1 | 25-02-2021 | NONE | |

EPO FORM P0459

For more details about this annex : see Official Journal of the European Patent Office, No. 12/82